(19)

Europäisches
Patentamt
European
Patent Office
Office européen
des brevets

(11) **EP 1 301 976 B1**

(12) **EUROPEAN PATENT SPECIFICATION**

(45) Date of publication and mention
of the grant of the patent:
**30.07.2008 Bulletin 2008/31**

(51) Int Cl.:
**H02K 3/04** (2006.01)

(21) Application number: **00942984.6**

(86) International application number:
**PCT/US2000/016980**

(22) Date of filing: **20.06.2000**

(87) International publication number:
**WO 2001/099253 (27.12.2001 Gazette 2001/52)**

(54) **METHOD OF WINDING A ROTATING INDUCTION APPARATUS**

VERFAHREN ZUM WICKELN EINER SICH DREHENDEN INDUKTIONSVORRICHTUNG

PROCEDE POUR ENROULER UN APPAREIL A INDUCTION ROTATIF

(84) Designated Contracting States:
**AT BE CH CY DE DK ES FI FR GB GR IE IT LI LU MC NL PT SE**

(43) Date of publication of application:
**16.04.2003 Bulletin 2003/16**

(73) Proprietor: **Borealis Technical Limited**
**Gibraltar (GI)**

(72) Inventor: **MUHR, George, H.**
**Sudbury, Ontario (CA)**

(74) Representative: **Coates, Ian Harold et al**
**Scott & York**
**Intellectual Property Ltd**
**45 Grosvenor Road**
**St. Albans**
**Hertfordshire, AL1 3AW (GB)**

(56) References cited:
| | |
|---|---|
| JP-A- 5 044 672 | JP-A- 58 198 154 |
| US-A- 2 745 029 | US-A- 4 309 634 |
| US-A- 4 346 320 | US-A- 6 054 837 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

This invention relates generally to a rotating induction apparatus and more specifically to a method of winding a rotating induction apparatus.

**Background Art**

In a rotating induction apparatus, a current of electrical charge generated within a magnetic field experiences a force perpendicular to the flow of charge and to the lines of force of the magnetic field. If a conductor is forced through a magnetic field by an external prime mover, an electrical current is caused to flow; this is the principle of the operation of an electrical generator. When an electrical current flows through a conductor in a magnetic field, a force is applied to the conductor; this is the principle of the operation of an electrical motor.

In an alternating current (AC) rotating induction apparatus, a rotating magnetic field is produced by the stator or stationary portion of the apparatus. This rotating magnetic field interacts with current carried by conductors of the rotor, causing the rotor to turn. It also produces currents in the rotor conductors by transformer action. Thus, the rotor needs no connections to an electrical supply and is simply supported by bearings which allow free rotation.

The rotating magnetic field is produced by coils, that are made of coils of wire, suitably positioned on the stator. Each coil produces a varying magnetic field of fixed orientation when energized with an AC current. By positioning several coils of differing orientations on a single stator and energizing the coils with alternating currents of differing phase, a rotating magnetic field is produced, which is the sum of the time-varying fixed orientation magnetic fields generated by each coil per phase.

For a rotating induction apparatus having greater than three phases, the coils once wound around the stator may become cumbersome and difficult to wind. As the number of phases increases, the coils become increasingly cumbersome and difficult to wind.

US 4309634 (Koroly et al) discloses a polyphase stator winding of dynamoelectric machine including a plurality of multi-loop coils which are circumscribed about one another. Each coil has at least one loop that constitutes two coil sides (a too or radially inner conductor and a bottom or radially outer conductor) and two involuted connector ring segments.

US 4346320 (Davey et al) discloses a dynamoelectric machine stator winding having a plurality of coil sides of varying lengths disposed in a plurality of slots located around the inner periphery of a tubular stator core.

US 6054837 (Edelson et al) discloses a polyphase induction machine. The machine is constructed with concentrated full span windings. Twelve or more phases are used to sufficiently cover the air gap region, in contrast to the conventional three phases using distributed and chorded windings.

US 2745029 (McElligott, John E) discloses a dynamoelectric machine with improved armature windings for polyphase generators of large sizes.

JP 05044672 (Matsushita Electric Ind. Co. Ltd) discloses apparatus which reduces the electric current flowing through an electric power source part, terminal part, junction wire and winding wires by forming the motor driven element of a compressor from the winding wires in two systems.

JP 58198154 (Tokyo Sanyo Electric Co. Ltd) discloses apparatus which enables the size of a compressor to be reduced by forming the I-pole of a main coil which is wound on a stator in 5-series and the other pole side in 4-series, and fitting the end of the 4-series main coil to the I-pole side.

**Disclosure of Invention**

Thus, a need has arisen for an improved method for winding a rotating induction apparatus.

In accordance with an embodiment of the present invention, a method of winding an electrical rotating apparatus comprises: determining a desired number of phases that is output from the electrical rotating apparatus, wherein the number of phases is greater than three; providing a stator; providing a rotor electromagnetically coupled to a magnetic field generated by the stator; providing a plurality of coils, wherein the plurality of coils includes a first coil and a second coil, wherein the plurality of coils are wound around the stator; placing the first coil on the right side of the stator; and placing the second coil on the left side of the stator.

In accordance with another embodiment of the present invention, an electrical rotating apparatus comprises: a number of phases, wherein the number of phases is output from the electrical rotating apparatus and the number of phases is greater than three; a stator; a rotor electromagnetically coupled to a magnetic field generated by the stator; and coils comprising a first coil and a second coil, wherein the first and second coils are wound around the stator, wherein the first coil is on a right side of the stator and the second coil is on a left side of the stator.

In accordance with another embodiment of the present invention, an electrical rotating apparatus comprises: a number of phases, wherein the number of phases is output from the electrical rotating apparatus and the number of phases is greater than three; a stator comprising a plurality of slots greater than or equal to twice the number of phases, the plurality of slots comprising a first slot and a second slot; a rotor electromagnetically coupled to a magnetic field generated by the stator; coils that are wound around the stator, wherein the coils comprise: a first coil coupled to the first slot and the second slot; and a second coil coupled to the first slot and the second slot, wherein the first coil is on a right side of the stator and the second coil is on a left side of the stator.

A technical advantage of the present invention is that it substantially reduces the problems associated with winding a rotating induction apparatus having more than three phases. Another technical advantage of the present invention is that it spaces the coils, such that the coils are distributed evenly around the stator.

Other technical advantages of the present invention are set forth in or will be apparent from the drawings and the description of the invention which follows, or may be learned from the practice of the invention.

**Brief Description of the Drawings**

For a more complete explanation of the present invention and the technical advantages thereof, reference is now made to the following description and the accompanying drawings, wherein like reference numerals represent like parts, in which:

Fig. 1 illustrates a schematic of the coils of an induction apparatus of the present invention;

Fig. 2 illustrates a three-dimensional schematic of the coils of an induction apparatus of the present invention;

Fig. 3 illustrates a schematic of the coils according to the present invention;

Fig. 4 illustrates a schematic of the coils of another embodiment of the present invention; and

Fig. 5 illustrates a schematic of the coils of another embodiment of the present invention.

Fig. 6 illustrates a schematic of two of the coils of the embodiment of the invention described in Fig. 5; and

Fig. 7 illustrates a schematic of two of the coils of the embodiment of the invention described in Fig. 5, where the stator has no slots.

**Best Mode for Carrying Out the Invention**

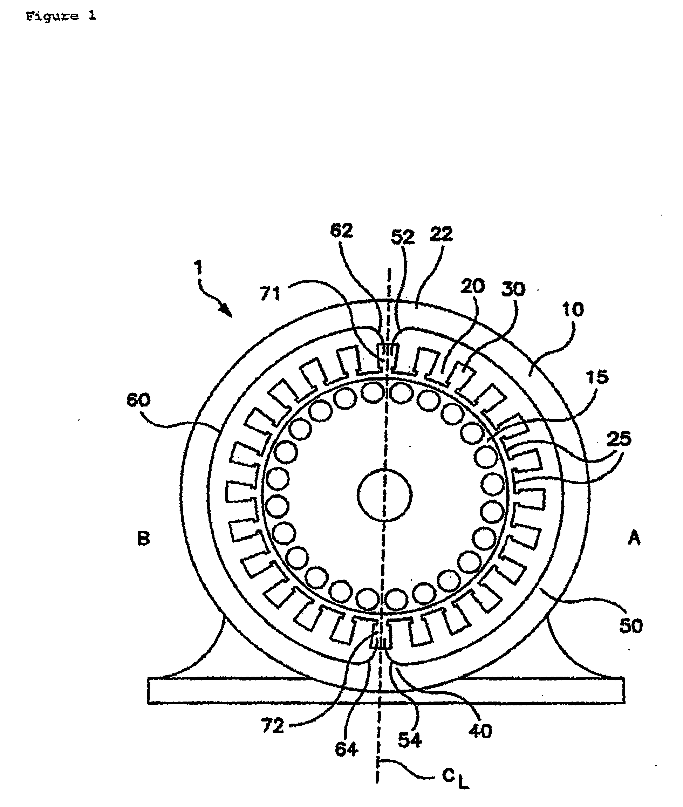

Referring to Figs. 1 though 5, the present invention may utilize multiple, i.e., more than three, independently driven phases. Preferably, the apparatus uses twelve or more phases. Alternatively, the apparatus uses eighteen or more phases. For a rotating induction apparatus, the number of phases is the number of independently driven stator circuits, wherein a stator circuit is a pair of slots that coils are to be inserted. The present invention may be used with any number of desired phases that is greater than three. The number of phases, however, may depend on the structural limitations of the apparatus.

Additionally, the present invention may be used with any number of poles. The number of slots in the stator will be equivalent to the number of phases multiplied by the number of poles.

Fig. 1 illustrates a schematic of the coils on an induction apparatus of the present invention. Fig. 1 depicts a stator 10, stator teeth 20, and slots 30. Rotor 15 is electromagnetically coupled to a magnetic field generated by stator 10. Thus, there may be an airgap 25 between rotor 15 and stator 10. Coils 40 are wound around stator 10.

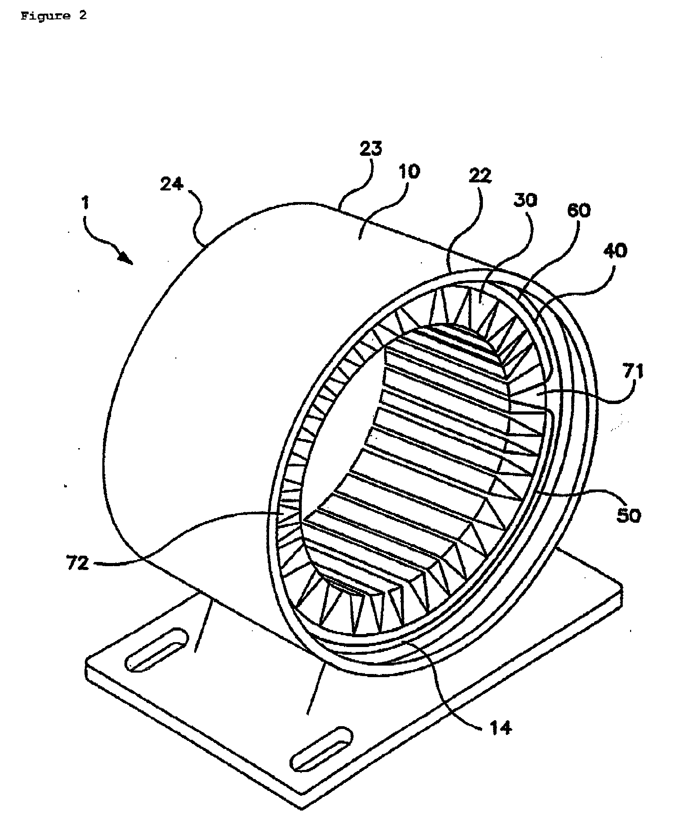

As shown in Fig. 2, stator 10 is three-dimensional, having a first end 22, a second end 24, and a longitudinal portion 23. For purposes of depicting coils 40 of the present invention, in Fig. 1, just first end 22 of stator 10 is illustrated.

Figs. 1 and 2, for simplification of the illustration, show two coils of wire, 50 and 60. Apparatus 1, however, may include many more coils 40, for example two coils for each pair of stator slots, however, to simplify the illustration, these additional coils are not shown.

With reference Fig. 1, coils 40 include a plurality of coils, such as first coil 50 and second coil 60. Coils 50 and 60 may comprise one wire or multiple wires, that are repeatedly wrapped around stator 10, such that there is a number of turns of wire in the coil. Alternatively, coils 50 and 60 may include one wire that is wrapped into the two coils 50 and 60. Preferably, coils 50 and 60 are coupled together, such as with a wire.

The number of wires and turns in the coils may depend on the desired characteristics of the motor or other factors. In creating the turns, the coils may start, for example, at first end 22 of stator 10, then travel down the length of stator 10 (through a slot 30) and around the stator at the second end, then continue back through the length of stator 10, repeating this pattern a desired number of times. Coils 40 are thus wound around stator 10, being in slots 30, through grooves in stator 10, through drill holes in stator 10, or if there are no slots in stator 10, then by resting in airgap 25.

Coils 40 may be driven by inverters, a pure sinusoidal current, a DC current, or any other means for driving coils of a rotating induction apparatus.

First coil 50 includes a first insertion portion 52 and a second insertion portion 54. Second coil 60 includes a first insertion portion 62 and a second insertion portion 64. The terms insertion portion do not necessarily refer to the "end" of a coil, but rather, refers to the fact that this part of the coil is in a slot in the stator. Thus, first insertion portion 52 of first coil 50 is the part of first coil 50 that is in slot 30; it may or may not be an actual end of first coil 50.

Additionally, first coil 50 or second coil 60 may include a plurality of turns and wires. For example, the number of turns in a coil may be determined by the following relationship:

$$\text{Turns} = \frac{22{,}500{,}000 \times \text{coil voltage}}{\text{frequency} \times (\text{Flux} / \text{pole}) / \text{coil} \times K_d \times K_s}$$

(where flux per pole is given in lines of force [$10^{-8}$ Webers], coil voltage is in volts RMS, frequency is in Hertz, Kd is the winding distribution factor [which in the present invention is 1 or about 1], and Ks is the winding chord factor [which in the present invention is 1 or about 1]). Thus, if the flux density increases, the number of turns should decrease, and if the flux density decreases, the number of turns should increase.

The coils may have a number of wires in each coil. The number of wires is determined by the desired cross-section area of copper to carry the current.

This may be in the form of one thick wire or several thinner wires, such that a desired cross-sectional area of copper is obtained. The desired cross-section area of copper is determined by the current flow desired in the coils and the desired cross-sectional area per unit current. Preferably, the number of wires is ten or less. More preferably the number of wires is between four and ten, and still more preferably four wires are used in each coil. Alternatively, one wire may be used in each coil. For example, if 5.136 Amps per phase (where in the present invention each phase could have two coils) is desired, then the total cross-section area of copper should be 0.65 mm$^2$ (1284 circular mils). This may be obtained by many wires having a cumulative cross-sectional area equivalent to 0.65 mm$^2$ (1284 circular mils).

The wires in the coil are wrapped around the stator the desired number of turns. Thus each coil includes its wires wrapped around the stator a desired number of turns, creating a thick coil. For example, an eighteen phase motor, with two coils for each phase, may have fifty-nine turns in each coil, and thus one hundred and eighteen turns per each phase- Further, any reasonable wire size may be used, such as 0.64 mm$^2$ (2 x 22 AWG) wire.

As depicted in Fig. 1, stator 10 includes twenty-four slots. As stated above, the present invention may be used with any number of slots.

Preferably, the number of slots, however, is greater than or equal to twice the number of phases. Further, it is preferable to use a stator having either twenty-four, thirty, thirty-six, forty-two, forty-eight, fifty-four, sixty, sixty-six, or seventy-two slots.

First insertion portion 52 of first coil 50 is attached to a first slot 71 and second insertion portion 54 of first coil 50 is attached to a second slot 72. The first and second slots may be referred to as a slot pair. First insertion portion 62 of second coil 60 is attached to first slot 71 and second insertion portion 64 of second coil 60 is attached to second slot 72.

The first insertion portion and the second insertion portion of a coil of winding 40 should be in different slots; however, multiple first insertions portions of multiple coils may occupy the same slot.

For example, in a twenty-four slot stator with a twelve phase motor, first slot 71 may be the first slot on stator 10 and second slot 72 may be the thirteenth slot on stator 10. Preferably, first slot 71 and second slot 72 are 180° electrical degrees apart, such that, for example, if first slot 71 was the tenth slot, second slot 72 is preferably the twenty-second slot (which are 180° electrical degrees apart). For example, with a two pole, twelve phase apparatus, first slot 71 may be any slot numbered 1 to 12, and second slot 72 may be any slot numbered 13 to 24. Additionally, for example, with a two pole, N phase apparatus having 2N number of slots, first slot 71 may be any slot numbered 1 to N, and second slot 72 will be N slots away from the first slot. Additionally, for example, with a four pole, N phase apparatus having 4N number of slots, first slot 71 may be any slot numbered 1 to N, the second slot 72 will be N slots away from the first, the third slot will be a slot from (2N+1) to 3N, and the fourth slot will be N slots from the third. Regardless of the number of poles, the slots remain 180° electrical degrees apart.

According to an embodiment of the present invention, **Fig. 1** illustrates that, from the perspective of looking at first end 22 of stator 10, first coil 50 is placed on the right side of stator 10 and second coil 60 is placed on the left side of stator 10. The terms left and right are with reference to an imaginary line "$C_L$" that exists between first slot 71 and second slot 72, from a view that is looking at first end 22, regardless of how the coils are wound on other sides of the stator 10. Further, imaginary line Cl is only a reference point, and may be drawn between any of the slots on stator 10, so long as imaginary line Cl divides stator 10 in half. "Left" means to the left of imaginary line "$C_L$" and "right" means to the right of imaginary line "$C_L$". In **Fig. 1**, between first slot 71 and second slot 72, the right side of stator 10 is identified with an "A" and the left side of stator 10 is identified with a "B." Further, use of the terms right and left do not imply that the coils are in an arcuate pattern, but rather that the coil is left or right of imaginary line "$C_L$' between the two slots.

For additional coils used in the slots, between any two pairs of slots that are 180˚ electrical degrees apart, preferably half of the coils are on the right side of the imaginary line, and the other half of the coils are on the left side of the imaginary line. As stated above, this is preferably repeated for each pair of slots on stator 10.

Fig. 2 illustrates a three-dimensional schematic of the coils of an induction apparatus of the present invention. Apparatus 1 includes a stator 10 with slots 30. As shown, there are thirty-six (36) slots. Coils 40 include a first coil 50 and a second coil 60. First coil 50 and second coil 60 are both in first slot 71 (slot number one) and second slot 72 (slot number nineteen). First coil 50 is on the right of stator 10 and second coil 60 is on the left of stator 10, with respect to an imaginary line between first slot 71 and second slot 72 from the perspective of looking at first end 22 of stator 10. As can be seen in **Fig. 2,** coils 40 may be placed on an inside of stator 10, such as on a lip 14 of stator 10. Alternatively, coils 40 may be placed on the outside of stator 10, around slots 30, or through drill holes in the stator. Alternatively, stator 10 may have no slots, with the coils being near the surface of stator 10.

First coil 50 and second coil 60 may have an about equal number of wires and turns within first coil 50 and second coil 60. Preferably, first coil 50 and second coil 60 have an equal number of wires and turns; i.e., it is preferable to have an equal number of coils, having an equal number of wires and turns, on the left side and right side of stator 10.

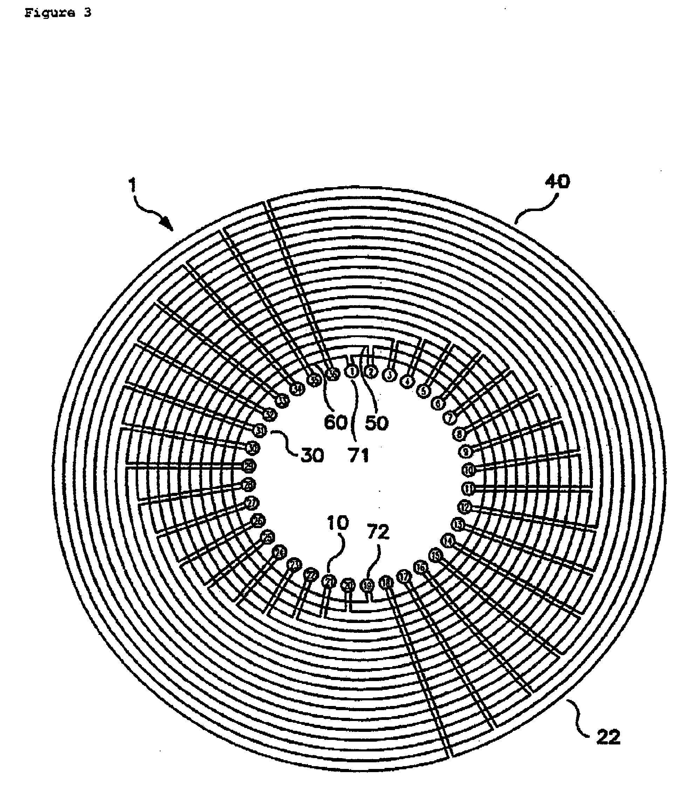

**Fig. 3** illustrates a schematic of the coils of apparatus 1 according to the present invention. **Fig. 3** shows a simplified view of slots 30 (numbered one to thirty-six), however in this illustration, all of the coils 40 of the apparatus 1 are shown. For example, coils 40 include first coil 50 and second coil 60, which are both in first slot 71 and second slot 72. Further, first coil 50 is on the right of stator 10 and second coil is on the left of stator 10 (with respect to the imaginary line between the two slots first coil 50 and second coil 60 are in). This is repeated for each of the coils 40 in each pair of slots 30. As shown, for each pair of slots that are 180˚ electrical degrees apart, one coil is on the right and one coil is on the left.

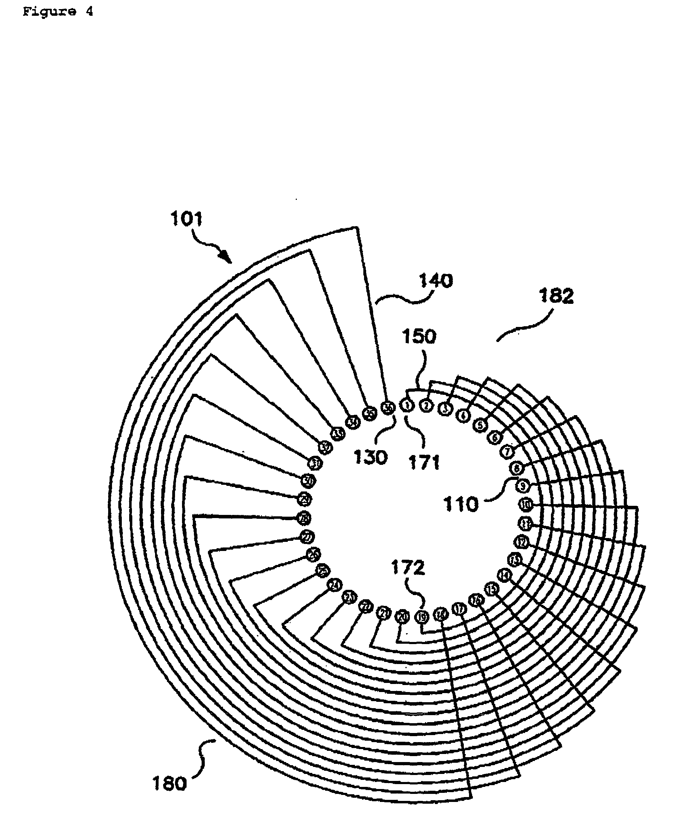

**Fig. 4** illustrates a schematic of the coils of apparatus 101, which is another embodiment of the present invention. **Fig. 4** shows a simplified view of slots 130 (numbered one to thirty-six). Again, the present invention may be used with any number of slots, however, thirty-six (36) is depicted in **Fig. 4.** In this embodiment, coils 140 are in a first slot 171 and a second slot 172, where second slot 172 is 180˚ electrical degrees from first slot 171.

Coils 140 includes coil 150. Coil 150 may include a plurality of wires and turns. For example, coil 150 is on the right side of stator 10, with respect to an imaginary line between first slot 171 (slot number 1) and second slot 172 (slot number 19). As shown, all of coils 140 are on the right side. Alternatively, all of coils 140 may be on the left side. However, with this embodiment, a large percentage of coils accumulate near section 180, while in section 182, there is not many coils. With reference to Fig. 3, because each of the coils 40 between each slot is divided in half, with one half on the right and one half on the left of stator 10, coils 30 take up less space around stator 10 than coils 130 around stator 110 in **Fig. 4.**

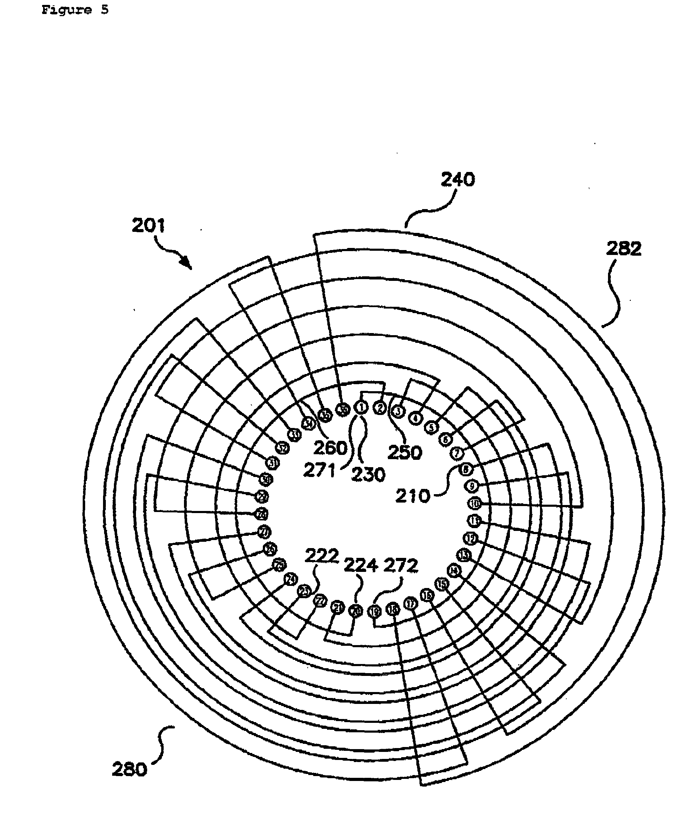

**Fig. 5** illustrates a schematic of the coils of apparatus 201, which is another embodiment of the present invention. **Fig. 5** shows a simplified view of slots 230 (numbered one to thirty-six). Again, the present invention may be used with any number of slots, however, thirty-six (36) is depicted in **Fig. 5.** In this embodiment, coils 240 travel from a first slot to a second slot, where the second slot is 180˚ electrical degrees from the first slot. Further, the coils in coils 240 alternate between being on the right side and being on the left side of stator 210, from the perspective of looking at first end 222 of stator 210.

Coils 240 include a first coil 250 and a second coil 260. First coil 250 and second coil 260 may include a plurality of turns and wires. Thus, for example, first coil 250 is in a first slot 271 (slot number 1) and a second slot 272 (slot number 19), while second coil 260 is in a third slot 273 (slot number 2) and a fourth slot 274 (slot number 20). Coils 240 alternate between being on a left side or being on a right side of stator 210, with respect to an imaginary line between the pairs of slots. Thus, coil 250 is on the right and coil 260 is on the left. This results in an even distribution of coils on both sides 280 and 282.

Any coil usable in stators may be used for the coils of the present invention. Further, the present invention is applicable to a variety of geometries of the rotating induction apparatus, including, for example, AC induction apparatus, and squirrel cage and wound rotor apparatus, which includes buried conductors and three phase and high phase order wound rotors. Further, the present invention is applicable to geometries in which the region of interaction between stator and rotor has circular symmetry about the axis of rotation, magnetic flux is generally normal to the region of interaction, and current flow is generally perpendicular both to flux and the direction of motion. Alternative geometries which may be utilized in the method of the present invention are axial flux, or pancake, motors, radial flux geometries in which the rotor is external to the stator, or geometries which use a combination of axial and radial flux, or multiple axial flux paths. Additionally, a dual-sided pancake stator that is surrounded on both faces by pancake rotor may be used.

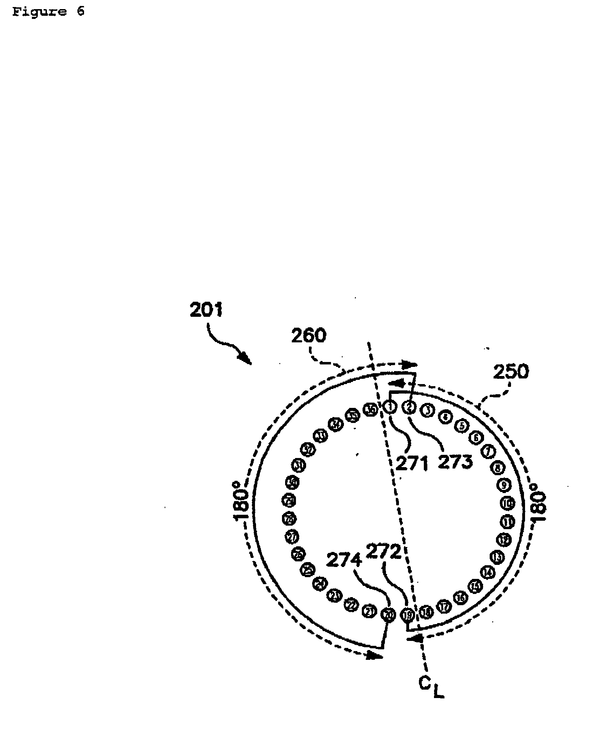

Referring to Fig. 6, a simplified schematic of coils 201 according to the embodiment of Fig. 5, is shown, with like reference numerals referring to like elements. Further, reference line Cl of Fig. 1 is included, with first slot 271 and third slot 273 on the right side of reference line CL, and second slot 272 and fourth slot 274 on the left side of reference line CL.

Moreover, as was described in reference to Fig. 5, once first coil 250 and second coil 260 are inserted in first slot 271 and third slot 273, respectively, they are wound in a direction opposite each other.

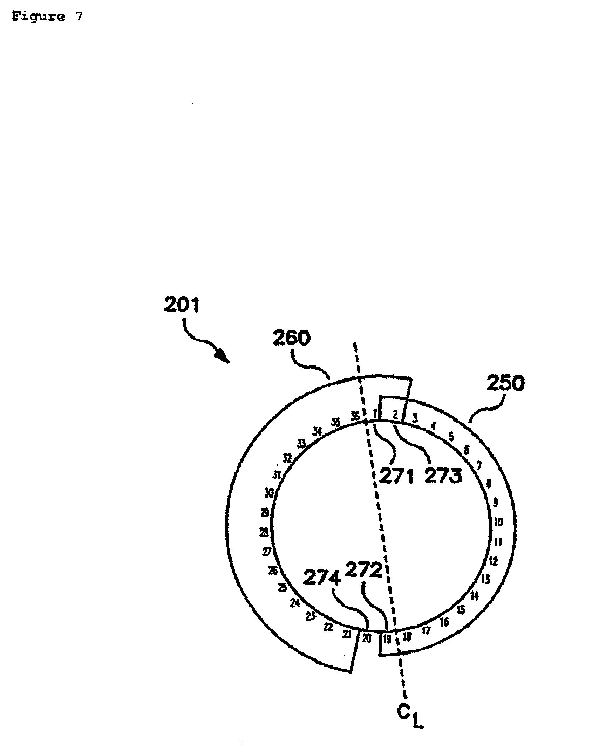

Referring to Fig. 7, a simplified schematic of coils 201 according to the embodiment of Fig. 5, is shown, except there are no slots, i.e., the slots have no depth and are substantially flat, and the coils are located at a position near the surface of the stator before being wound around stator 10.

## Industrial Application

Thus the method of winding an electrical rotating apparatus described herein substantially reduces the problems associated with winding a rotating induction apparatus having more than three phases. While this invention has been described with reference to illustrative embodiments, it is to be understood that this description is not intended to be construed in a limiting sense. Modifications to and combinations of the illustrative embodiments will be apparent to persons skilled in the art upon reference to this description. It is to be further understood, therefore, that changes in the details of the embodiments of the present invention and additional embodiments of the present invention will be apparent to persons of ordinary skill in the art having reference to this description.

## Claims

1. A method of winding an electrical rotating apparatus (1) comprising:

    determining a desired number of phases that is output from said electrical rotating apparatus (1);
    providing a stator (10) comprising a plurality of slot pairs, each of said slot pairs comprising a first slot (71) and a second slot (72), wherein the number of said slots is greater than or equal to twice said number of phases;
    providing a rotor (15) electromagnetically coupled to a magnetic field generated by said stator (10);
    providing a plurality of coils (40) that are wound around said stator (10), wherein said coils (40) comprise:

    a first coil (50) coupled to a first slot pair; and
    a second coil (60) coupled to a second slot pair;

    **characterized by** said number of phases being greater than three, with said first slot (71) of each slot pair being on the right side of a reference line dividing said stator (10) in half, and said second slot (72) of each slot pair being on the left side of said reference line, wherein when said first coil (50) is inserted in said first slot (71) of said first slot pair and when said second coil (60) is inserted in said first slot (71) of said second slot pair, said first coil (50) and said second coil (60) being wound around said stator (10) in directions opposite to each other, and wherein said first slot (71) of said first slot pair and said second slot (72) of said first slot pair are 180 electrical degrees apart from each other, and said first slot (71) of said second slot pair and said second slot (72) of said second slot pair are 180 electrical degrees apart from each other.

2. The method of claim 1, wherein said number of phases is greater than twelve.

3. The method of claim 1, wherein said number of phases is greater than eighteen.

4. The method of claim 1 with said first slot pair and said second slot pair being the same slot pair.

5. The method of claim 1, wherein said first coil (50) comprises at least one first wire and said second coil (60) comprises at least one second wire.

6. The method of claim 5, wherein the number of wires in said first coil (50) equals the number of wires in said second coil (60).

7. The method of claim 5, wherein said first wire is wound a plurality of turns around said stator (10) and said second wire is wound a plurality of turns around said stator (10) and said second coil (60).

8. The method of claim 7, wherein said plurality of turns is computed according to the formula:

$$\text{Turns} = \frac{22{,}500{,}000 \times \text{coil voltage}}{\text{frequency} \times (\text{Flux} / \text{pole}) / \text{coil} \times K_d \times K_s}$$

wherein Kd is the winding distribution factor and Ks is the winding chord factor.

9. The method of claim 1, wherein said slots are substantially flat.

10. The method of claim 1, wherein said step of providing a plurality of coils (40) comprises:

   providing said plurality of coils (40), wherein said plurality of coils (40) comprise said first coil (50) and said second coil (60), wherein said first coil (50) and said second coil (60) comprise a wire wound a plurality of turns such that said wire is wound into said first coil (50) and said second coil (60).

11. An electrical rotating apparatus (1) comprising:

   a number of phases, wherein said number of phases is output from said electrical rotating apparatus (1);
   a stator (10) comprising a plurality of slot pairs, each of said slot pairs comprising a first slot (71) and a second slot (72), wherein the number of said slots is greater than or equal to twice said number of phases;
   a rotor (15) electromagnetically coupled to a magnetic field generated by said stator (10); and
   a plurality of coils (40) that are wound around said stator (10), wherein said coils (40) comprise:
   a first coil (50) coupled to a first slot pair; and
   a second coil (60) coupled to a second slot pair;

   **characterized by** said number of phases being greater than three, with said first slot (71) of each slot pair being on the right side of a reference line dividing said stator (10) in half, and said second slot (72) of each slot pair being on the left side of said reference line, wherein when said first coil (50) is inserted in said first slot (71) of said first slot pair and when said second coil (60) is inserted in said first slot (71) of said second slot pair, said first coil (50) and said second coil (60) being wound around said stator (10) in directions opposite to each other, and wherein said first slot (71) of said first slot pair and said second slot (72) of said first slot pair are 180 electrical degrees apart from each other, and said first slot (71) of said second slot pair and said second slot (72) of said second slot pair are 180 electrical degrees apart from each other.

12. The electrical rotating apparatus of claim 11, wherein said number of phases is at least twelve.

13. The electrical rotating apparatus of claim 11, wherein said number of phases is at least eighteen.

14. The electrical rotating apparatus of claim 11, with said first slot pair and said second slot pair being the same slot pair.

15. The electrical rotating apparatus of claim 11, wherein said apparatus has a number of poles and said number of slots is equivalent to the number of poles multiplied by the number of phases.

16. The electrical rotating apparatus of claim 11, wherein said first coil (50) comprises a plurality of first wires and said second coil (60) comprises a plurality of second wires.

17. The electrical rotating apparatus of claim 16, wherein the number of wires in said first coil (50) equals the number of wires in said second coil (60).

18. The electrical rotating apparatus of claim 17, wherein said first wire is wound a plurality of turns around said stator (10) and said second wire is wound a plurality of turns around said stator (10).

19. The electrical rotating apparatus of claim 18, wherein the number of turns in said first coil (50) equals the number of turns in said second coil (60).

20. The electrical rotating apparatus of claim 18, wherein said plurality of turns of said first coil (50) or said second coil (60) is computed according to the formula:

$$Turns = \frac{22,500,000 \times coil\ voltage}{frequency \times (Flux / pole) / coil \times K_d \times K_s}$$

wherein Kd is the winding distribution factor and Ks is the winding chord factor.

21. The electrical rotating apparatus of claim 11, wherein said first coil (50) and said second coil (60) comprise a wire that is wound into both said first coil (50) and said second coil (60).

22. The electrical rotating apparatus of claim 11, wherein said apparatus is a motor.

23. The electrical rotating apparatus of claim 11, wherein said apparatus is a generator.

**Patentansprüche**

1. Verfahren zum Wickeln einer rotierenden elektrischen Vorrichtung (1), das Folgendes umfasst:

   Bestimmen einer gewünschten Anzahl von Phasen, die von der rotierenden elektrischen Vorrichtung (1) abgegeben werden;
   Bereitstellen eines Stators (10) mit einer Vielzahl von Nut-Paaren, wobei jedes der Nut-Paare eine erste Nut (71) und eine zweite Nut (72) umfasst, wobei die Anzahl der Nuten größer oder gleich dem Doppelten der Anzahl der Phasen ist;
   Bereitstellen eines Rotors (15), der elektromagnetisch mit einem Magnetfeld gekoppelt ist, das von dem Stator (10) erzeugt wird,
   Bereitstellen einer Anzahl von Wicklungen (40), die um den Stator (10) gewickelt sind, wobei die Wicklungen (40) Folgendes umfassten:

      eine erste Wicklung (50), die mit einem ersten Nut-Paar gekoppelt ist, und
      eine zweite Wicklung (60), die mit einem zweiten Nut-Paar gekoppelt ist;

   **dadurch gekennzeichnet, dass** die Anzahl von Phasen größer als drei ist, wobei sich die erste Nut (71) jedes Nut-Paares auf der rechten Seite einer Bezugslinie befindet, die den Stator (10) halbiert, und die zweite Nut (72) jedes Nut-Paares sich auf der linken Seite der Bezugslinie befindet, wobei, wenn die erste Wicklung (50) in die erste Nut (71) des ersten Nut-Paares eingeführt wird und wenn die zweite Wicklung (60) in die erste Nut (71) des zweiten Nut-Paares eingeführt wird, die erste Wicklung (50) und die zweite Wicklung (60) um den Stator (10) in zueinander entgegengesetzten Richtungen gewickelt werden, und wobei die erste Nut (71) des ersten Nut-Paares und die zweite Nut (72) des ersten Nut-Paares einen Abstand von 180 elektrischen Graden voneinander aufweisen, und die erste Nut (71) des zweiten Nut-Paares und die zweite Nut (72) des zweiten Nut-Paares einen Abstand von 180 elektrischen Graden voneinander aufweisen.

2. Verfahren nach Anspruch 1, bei dem die Anzahl von Phasen größer als zwölf ist.

3. Verfahren nach Anspruch 1, bei dem die Anzahl von Phasen größer als achtzehn ist.

4. Verfahren nach Anspruch 1, bei dem das erste Nut-Paar und das zweite Nut-Paar das gleiche Nut-Paar sind.

5. Verfahren nach Anspruch 1, bei dem die erste Wicklung (50) zumindest einen ersten Draht umfasst, und die zweite Wicklung (60) zumindest einen zweiten Draht umfasst.

6. Verfahren nach Anspruch 5, bei dem die Anzahl der Drähte in der ersten Wicklung (50) gleich der Anzahl von Drähten in der zweiten Wicklung (60) ist.

7. Verfahren nach Anspruch 5, bei dem der erste Draht in einer Vielzahl von Windungen um den Stator (10) gewickelt ist und der zweite Draht in einer Vielzahl von Windungen um den Stator (10) und die zweite Wicklung (60) gewickelt ist.

8. Verfahren nach Anspruch 7, bei dem die Vielzahl von Windungen entsprechend der Gleichung:

$$\text{Windungen} = \frac{22.500.000 \times \text{Wicklungs-Spannung}}{\text{Frequenz} \times (\text{Fluss/Pol}) \, / \, \text{Wicklung} \times K_d \times K_s}$$

berechnet wird, worin $K_d$ der Wicklungs-Verteilungsfaktor und $K_s$ der Wicklungs-Sehnenfaktor ist.

9. Verfahren nach Anspruch 1, bei dem die Nuten im Wesentlichen eben sind,

10. Verfahren nach Anspruch 1, bei dem der Schritt der Bereitstellung einer Anzahl von Wicklungen (40) Folgendes umfasst:

Bereitstellen der Anzahl von Wicklungen (40), wobei die Anzahl von Wicklungen (40) die erste Wicklung (50) und die zweite Wicklung (60) umfasst, wobei die erste Wicklung (50) und die zweite Wicklung (60) einen Draht umfassen, der in einer Vielzahl von Windungen derart gewickelt ist, dass der Draht zu der ersten Wicklung (50) und der zweiten Wicklung (60) gewickelt ist.

11. Rotierende elektrische Vorrichtung (1), mit:

einer Anzahl von Phasen, wobei die Anzahl der Phasen von der rotierenden elektrischen Vorrichtung (1) abgegeben wird;
einem Stator (10), der eine Anzahl von Nut-Paaren umfasst, wobei jedes der Nut-Paare eine erste Nut (71) und eine zweite Nut (72) umfasst, wobei die Anzahl der Nuten größer oder gleich dem Doppelten der Anzahl von Phasen ist;
einem Rotor (15), der elektromagnetisch mit einem Magnetfeld gekoppelt ist, das von dem Stator (10) erzeugt wird; und
einer Anzahl von Wicklungen (40), die um den Stator (10) gewickelt sind, wobei die Wicklungen (40) Folgendes umfassen:

eine erste Wicklung (50), die mit einem ersten Nut-Paar gekoppelt ist; und
eine zweite Wicklung (60), die mit einem zweiten Nut-Paar gekoppelt ist;

**dadurch gekennzeichnet, dass** die Anzahl der Phasen größer als drei ist, wobei sich die erste Nut (71) jedes Nut-Paares auf der rechten Seite einer Bezugslinie befindet, die den Stator (10) halbiert, und die zweite Nut (72) jedes Nut-Paares auf der linken Seite der Bezugslinie liegt, wobei, wenn die erste Wicklung (50) in die erste Nut (71) des ersten Nut-Paares eingeführt ist, und wenn die zweite Wicklung (60) in die erste Nut (71) des zweiten Nut-Paares eingeführt ist, die erste Wicklung (50) und die zweite Wicklung (60) um den Rotor (10) in zueinander entgegengesetzten Richtungen gewickelt sind, und wobei die erste Nut (71) des ersten Nut-Paares und die zweite Nut (72) des zweiten Nut-Paares einen Abstand von 160 elektrischen Graden voneinander aufweisen, und die erste Nut (71) des zweiten Nut-Paares und die zweite Nut (72) des zweiten Nut-Paares einen Abstand von 180 elektrischen Graden voneinander aufweisen.

12. Rotierende elektrische Vorrichtung nach Anspruch 11, bei der die Anzahl der Phasen zumindest zwölf ist.

13. Rotierende elektrische Vorrichtung nach Anspruch 11, bei der die Anzahl der Phasen zumindest achtzehn ist.

14. Rotierende elektrische Vorrichtung nach Anspruch 11, bei der das erste Nut-Paar und das zweite Nut-Paar das gleiche Nut-Paar ist.

**15.** Rotierende elektrische Vorrichtung nach Anspruch 11, bei der die Vorrichtung eine Anzahl von Polen aufweist und die Anzahl der Nuten äquivalent zu der Anzahl von Polen multipliziert mit der Anzahl von Phasen ist.

**16.** Rotierende elektrische Vorrichtung nach Anspruch 11, bei der die erste Wicklung (50) eine Vielzahl von ersten Drähten umfasst, und die zweite Wicklung (60) eine Vielzahl von zweiten Drähten umfasst.

**17.** Rotierende elektrische Vorrichtung nach Anspruch 16, bei der die Anzahl der Drähte in der ersten Wicklung (50) gleich der Anzahl von Drähten in der zweiten Wicklung (60) ist.

**18.** Rotierende elektrische Vorrichtung nach Anspruch 17, bei der der erste Draht in einer Vielzahl von Windungen um den Stator (10) gewickelt ist und der zweite Draht in einer Vielzahl von Windungen um den Stator (10) gewickelt ist.

**19.** Rotierende elektrische Vorrichtung nach Anspruch 18, bei der die Anzahl der Windungen in der ersten Wicklung (50) gleich der Anzahl von Windungen in der zweiten Wicklung (60) ist.

**20.** Rotierende elektrische Vorrichtung nach Anspruch 18, bei der die Vielzahl von Windungen der ersten Wicklung (50) oder der zweiten Wicklung (60) entsprechend der Gleichung:

$$\text{Windungen} = \frac{22.500.000 \times \text{Wicklungs-Spannung}}{\text{Frequenz} \times (\text{Fluss/Pol}) / \text{Wicklung} \times K_d \times K_s}$$

berechnet wird, worin $K_d$ der Wicklungs-Verteilungsfaktor und $K_s$ der Wicklungs-Sehnenfaktor ist.

**21.** Rotierende elektrische Vorrichtung nach Anspruch 11, bei der die erste Wicklung (50) und die zweite Wicklung (60) einen Draht umfassen, der sowohl in die erste Wicklung (50) als auch die zweite Wicklung (60) gewickelt ist.

**22.** Rotierende elektrische Vorrichtung nach Anspruch 11, bei der die Vorrichtung ein Motor ist.

**23.** Rotierende elektrische Vorrichtung nach Anspruch 11, bei der die Vorrichtung ein Generator ist.

**Revendications**

**1.** Procédé pour enrouler un appareil électrique rotatif (1) comprenant les étapes consistant à :

déterminer un nombre souhaité de phases qui est délivré en sortie par ledit appareil électrique rotatif (1) ;
fournir un stator (10) comprenant une pluralité de paires de fentes, chacune desdites paires de fentes comprenant une première fente (71) et une seconde fente (72), dans lequel le nombre desdites fentes est supérieur ou égal au double dudit nombre de phases ;
fournir un rotor (15) qui est couplé électromagnétiquement à un champ magnétique généré par ledit stator (10);
fournir une pluralité de bobines (40) qui sont enroulées autour dudit stator (10), dans laquelle lesdites bobines (40) comprennent:

une première bobine (50) couplée à une première paire de fentes ; et une seconde bobine (60) couplée à une seconde paire de fentes ;

**caractérisé en ce que** ledit nombre de phases est supérieur à trois, avec ladite première fente (71) de chaque paire de fentes se trouvant sur le côté droit d'une ligne de référence qui divise ledit stator (10) en deux, et ladite seconde fente (72) de chaque paire de fentes se trouvant sur le côté gauche de ladite ligne de référence, dans lequel, quand ladite première bobine (50) est insérée dans ladite première fente (71) de ladite première paire de fentes et, quand ladite seconde bobine (60) est insérée dans ladite première fente (71) de ladite seconde paire de fentes, ladite première bobine (50) et ladite seconde bobine (60) sont enroulées autour dudit stator (10) dans des directions opposées l'une par rapport à l'autre, et dans lequel ladite première fente (71) de ladite première paire de fentes et ladite seconde fente (72) de ladite première paire de fentes sont orientées à 180 degrés électriques l'une par rapport à l'autre, et ladite première fente (71) de ladite seconde paire de fentes et ladite seconde fente (72) de ladite seconde paire de fentes sont orientées à 180 degrés électriques l'une par rapport à l'autre.

2. Procédé selon la revendication 1, dans lequel ledit nombre de phases est supérieur à 12.

3. Procédé selon la revendication 1, dans lequel ledit nombre de phases est supérieur à 18.

4. Procédé selon la revendication 1, dans lequel ladite première paire de fentes et ladite seconde paire de fentes sont la même paire de fentes,

5. Procédé selon la revendication 1, dans lequel ladite première bobine (50) comprend au moins un premier fil, et ladite seconde bobine (60) comprend au moins un second fil.

6. Procédé selon la revendication 5, dans lequel le nombre de fils dans ladite première bobine (50) est égal au nombre de fils dans ladite seconde bobine (60).

7. Procédé selon la revendication 5, dans lequel ledit premier fil est enroulé sur une pluralité de tours autour dudit stator (10), et ledit second fil est enroulé sur une pluralité de tours autour dudit stator (10) et de ladite seconde bobine (60).

8. Procédé selon la revendication 7, dans lequel ladite pluralité de tours est calculée selon la formule suivante :

$$\text{Tours} = \frac{22\ 500\ 000 \times \text{tension de bobine}}{\text{Fréquence} \times (\text{flux} / \text{pôle}) / \text{bobine} \times Kd \times Ks}$$

dans laquelle Kd est le facteur de distribution d'enroulement, et Ks est le facteur de corde d'enroulement.

9. Procédé selon la revendication 1, dans lequel lesdites fentes sont sensiblement plates.

10. Procédé selon la revendication 1, dans lequel ladite étape de fourniture d'une pluralité de bobines (40) comprend l'étape consistant à :

fournir ladite pluralité de bobines (40), dans lequel ladite pluralité de bobines (40) comprend ladite première bobine (50) et ladite seconde bobine (60), dans laquelle ladite première bobine (50) et ladite seconde bobine (60) comprennent un fil enroulé sur une pluralité de tours de sorte que ledit fil est enroulé dans ladite première bobine (50) et ladite seconde bobine (60).

11. Appareil électrique rotatif (1) comprenant :

un nombre de phases, dans lequel ledit nombre de phases est délivré en sortie par ledit appareil électrique rotatif (1) ;
un stator (10) comprenant une pluralité de paires de fentes, chacune desdites paires de fentes comprenant une première fente (71) et une seconde fente (72), dans lequel le nombre desdites fentes est supérieur ou égal au double dudit nombre de phases ;
un rotor (15) qui est couplé électromagnétiquement à un champ magnétique généré par ledit stator (10) ; et
une pluralité de bobines (40) qui sont enroulées autour dudit stator (10), dans lequel lesdites bobines (40) comprennent :

une première bobine (50) couplée à une première paire de fentes ; et une seconde bobine (60) couplée à une seconde paire de fentes ;

**caractérisé en ce que** ledit nombre de phases est supérieur à trois, avec ladite première fente (71) de chaque paire de fentes se trouvant sur le côté droit d'une ligne de référence qui divise ledit stator (10) en deux, et ladite seconde fente (72) de chaque paire de fentes se trouvant sur le côté gauche de ladite ligne de référence, dans lequel, quand ladite première bobine (50) est insérée dans ladite première fente (71) de ladite première paire de fentes et, quand ladite seconde bobine (60) est insérée dans ladite première fente (71) de ladite seconde paire de fentes, ladite première bobine (50) et ladite seconde bobine (60) sont enroulées autour dudit stator (10) dans des directions opposées l'une par rapport à l'autre, et dans lequel ladite première fente (71) de ladite première paire de fentes et ladite seconde fente (72) de ladite première paire de fentes sont orientées à 180 degrés électriques l'une par rapport à l'autre, et ladite première fente (71) de ladite seconde paire de fentes et ladite seconde fente (72) de ladite seconde paire de fentes sont orientées à 180 degrés électriques l'une par rapport à l'autre.

12. Appareil électrique rotatif selon la revendication 11, dans lequel ledit nombre de phases est au moins égal à 12.

13. Appareil électrique rotatif selon la revendication 11, dans lequel ledit nombre de phases est au moins égal à 18.

14. Appareil électrique rotatif selon la revendication 11, dans lequel ladite première paire de fentes et ladite seconde paire de fentes sont la même paire de fentes.

15. Appareil électrique rotatif selon la revendication 11, dans lequel ledit appareil a un nombre de pôles, et ledit nombre de fentes est équivalent au nombre de pôles multiplié par le nombre de phases.

16. Appareil électrique rotatif selon la revendication 11, dans lequel ladite première bobine (50) comprend une pluralité de premiers fils, et ladite seconde bobine (60) comprend une pluralité de seconds fils.

17. Appareil électrique rotatif selon la revendication 16, dans lequel le nombre de fils dans ladite première bobine (50) est égal au nombre de fils dans ladite seconde bobine (60).

18. Appareil électrique rotatif selon la revendication 17, dans lequel ledit premier fil est enroulé sur une pluralité de tours autour dudit stator (10), et ledit second fil est enroulé sur une pluralité de tours autour dudit stator (10).

19. Appareil électrique rotatif selon la revendication 18, dans lequel le nombre de tours dans ladite première bobine (50) est égal au nombre de tours dans ladite seconde bobine (60).

20. Appareil électrique rotatif selon la revendication 18, dans lequel ladite pluralité de tours de ladite première bobine (50) ou de ladite seconde bobine (60) est calculée selon la formule suivante :

$$\text{Tours} = \frac{22\ 500\ 000 \times \text{tension de bobine}}{\text{Fréquence} \times (\text{flux} / \text{pôle}) / \text{bobine} \times Kd \times Ks}$$

dans laquelle Kd est le facteur de distribution d'enroulement, et Ks est le facteur de corde d'enroulement.

21. Appareil électrique rotatif selon la revendication 11, dans lequel ladite première bobine (50) et ladite seconde bobine (60) comprennent un fil qui est enroulé à la fois dans ladite première bobine (50) et dans ladite seconde bobine (60).

22. Appareil électrique rotatif selon la revendication 11, dans lequel ledit appareil électrique rotatif est un moteur.

23. Appareil électrique rotatif selon la revendication 11, dans lequel ledit appareil électrique rotatif est une génératrice.

Figure 1

Figure 2

Figure 3

Figure 4

Figure 5

Figure 6

Figure 7

## REFERENCES CITED IN THE DESCRIPTION

**Patent documents cited in the description**

- US 4309634 A, Koroly
- US 4346320 A, Davey
- US 6054837 A, Edelson

- US 2745029 A, McElligott, John E
- JP 05044672 B
- JP 58198154 B